# EUROPÄISCHE PATENTANMELDUNG

(11) **EP 1 612 184 A2**
(43) Veröffentlichungstag der Anmeldung: **04.01.2006**
(21) Anmeldenummer: 05105457.5
(22) Anmeldetag: 21.06.2005
(51) Int. Cl.: B66F 9/24, E02F 9/24

(54) **Lademaschine mit Überlastsicherung**

(30) Priorität: 29.06.2004 DE 102004031248
(71) Anmelder: PLUSTECH OY, 33101 Tampere (FI)
(72) Erfinder:
(74) Vertreter: Holst, Sönke

(57) **Zusammenfassung**

Es wird ein Ladegerät (10) offenbart, mit wenigstens einem Antriebsstrang (68), wenigstens einer Überlastsicherungseinrichtung für den Antriebsstrang (68) und Mittel (50, 52, 54, 60, 62, 64, 82, 84, 88, 90, 92) zur Bestimmung eines Überlastungszustands für den Antriebsstrang (68). Es wird vorgeschlagen, anhand der Mittel (50, 52, 54, 60, 62, 64, 82, 84, 88, 90, 92) kritische Betriebszustände des Ladegeräts (10) zu bestimmen, durch welche die Belastung des Antriebsstrangs (68) potentiell beeinflussbar ist. Die Bestimmung von kritischen Betriebszuständen erfolgt mittels einer Steuereinheit (30), welche Signale der Mittel (50, 52, 54, 60, 62, 64, 82, 84, 88, 90, 92) auswertet und bei Erreichen voreinstellbarer Schwellwerte Steuersignale für eine Kraftstoffeinspritzpumpe (28) generiert, anhand der eine präventive Leistungsbegrenzung eingeleitet wird.

## Beschreibung

Ladegerät mit wenigstens einem Antriebsstrang, wenigstens einer Überlastsicherungseinrichtung für den Antriebsstrang und Mittel zur Bestimmung eines Überlastungszustands für den Antriebsstrang.

Bei Arbeitsmaschinen, wie z. B. Land-, Forst- und Baumaschinen, insbesondere Ladegeräte wie z. B. Teleskoplader, Bagger oder Kräne, kommen immer leistungsstärkere Motoren zum Einsatz. Eine Leistungserhöhung ist in der Regel auch mit einer Zunahme der am Antriebsstrang des Ladegeräts wirkenden Drehmomente verbunden, insbesondere wenn der Betriebszustand des Ladegeräts zu extremen Traktionsmomenten an den Antriebsachsen führt. Dies kann zu einer Überlastung des Antriebsstrangs führen, wenn die gesamte Antriebsleistung des Motors dem Antriebsstrang zugeführt wird. Als Folge dessen können Beschädigungen am Antriebsstrang, wie z. B. der Bruch einer Antriebswelle, auftreten.

Um das oben genannte Problem zu lösen ist es üblich eine Überlastsicherungseinrichtung vorzusehen, anhand der eine Leistungsbegrenzung des Motors vorgenommen wird, so dass bei Eintreten eines Überlastungszustands die Leistung des Motors begrenzt bzw. heruntergeregelt wird, um den Antriebsstrang zu schonen.

In der EP 901 928 A2 wird eine Arbeitsmaschine offenbart, die eine derartige Leistungsbegrenzung vorsieht. Hierbei werden Messeinrichtungen eingesetzt, welche auf den Antriebsstrang wirkende leistungsbegrenzende Größen, wie z. B. ein Drehmoment, ermitteln und einer Steuereinrichtung Signale zuführen, welche wiederum in Abhängigkeit von den Signalen ein Steuersignal zur Regelung bzw. Reduzierung der Ausgangsleistung des Antriebsmotors erzeugt. Derartige Messeinrichtungen am Antriebsstrang erfordern eine aufwendige Installation und sind mit hohen Kosten verbunden.

Das der Erfindung zugrunde liegende Problem wird darin gesehen, eine Überlastsicherung zu ermöglichen, mit der auf aufwendige Messeinrichtungen am Antriebsstrang verzichtet werden kann.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Ladegerät der eingangs genannten Art mit Mitteln versehen, anhand derer Betriebszustände des Ladegeräts bestimmbar sind, durch welche die Belastung des Antriebsstrangs potentiell beeinflussbar ist. Durch die Bestimmung von kritischen Betriebszuständen für das Ladegerät, welche die Belastung des Antriebsstrangs beeinflussen und somit zu Überlastungszuständen des Antriebsstrangs führen können, können auf kritische Belastungszustände des Antriebsstrangs hinweisende Rückschlüsse getroffen und eine präventive Leistungsbeschränkung des Motors eingeleitet werden. Die Überlastsicherungseinrichtung umfasst somit eine Bestimmung von kritischen Betriebszuständen am Ladegerät, die indirekt auf die Belastung des Antriebsstrangs schließen lassen, so dass auf eine direkte Erfassung von Messwerten innerhalb des Leistungsflusses am Antriebsstrang verzichtet werden kann. Durch die präventive Leistungsbeschränkung des Motors wird der Antriebsstrang von vornherein in einem sicheren Zustand gehalten. Es wird somit darauf verzichtet, den Belastungszustand des Antriebsstrangs direkt und/oder fortlaufend zu überwachen, bis sich ein Überlastungszustand einstellt, um dann eine Leistungsreduzierung bzw. -begrenzung einzuleiten. Vielmehr wird sichergestellt, dass in Abhängigkeit von Betriebszuständen, wie z. B. von der Last auf einer Antriebsachse des Ladegeräts, sich der Antriebsstrang stets in einem für ihn unkritischen Belastungszustand befindet. Durch unsachgemäße Bedienung des Ladegeräts in einem kritischen Betriebszustand, beispielsweise durch übermäßiges Gasgeben bei gleichzeitig hoher Achslast, könnte aufgrund zu hoher Traktionsmomente der Antriebsstrang einen Überlastungszustand erreichen und Schaden nehmen. Das Eintreten eines Überlastungszustands für den Antriebsstrang wird dadurch verhindert, dass eine präventive Leistungsbegrenzung bei Erreichen eines kritischen Betriebszustands des Ladegeräts eingeleitet wird.

Das Ladegerät ist mit einer Überlastsicherungseinrichtung versehen, welche eine Steuereinheit umfasst, mit welcher von den Mitteln gelieferte Signale erfassbar sind und eine an den Antriebsstrang abgegebene Antriebsleistung begrenzbar ist. Vorzugsweise wird hierbei eine elektronische Steuereinheit eingesetzt. Die Steuereinheit greift die von den Mitteln zur Bestimmung eines kritischen Betriebszustands des Ladegeräts gelieferten Signalen auf und generiert ein Steuersignal, durch welches die Leistungsabgabe des Motors begrenzt wird. Hierbei wird vorzugsweise elektronisch in die Motorregelung bzw. Motorsteuerung eingegriffen und die Leistung, die der Motor abgibt, auf einen für den Antriebsstrang unkritischen Wert begrenzt. Beispielsweise wird ein Signal, welches vom Gaspedal oder eines anderen geeigneten Bedienelementes (z.B. einem Handgashebel bei Traktoren) über die Steuereinheit zum Motor hin gemeldet wird, elektronisch begrenzt, indem sein Maximalwert verringert wird. Dieses kann durch eine einfache Steuerung oder auch durch einen geschlossenen Regelkreis geschehen. Es wäre auch denkbar, dass bei Motoren, deren Einspritzpumpe mechanisch angesteuert wird, der Hub der Ansteuerungsmechanik limitiert wird. Hierbei wird das Ziel verfolgt, die in den Motor eingespritzte Kraftstoffmenge zu begrenzen, um eine weitere Erhöhung der Leistungsabgabe, die zu einer Überlastung des Antriebsstranges führen könnte, zu unterbinden. Eine weitere Möglichkeit besteht darin, eine elektronisch gesteuerte Kraftstoffeinspritzpumpe bzw. ein elektronisch gesteuertes Kraftstoffeinspritzsystem (z. B. Common-Rail-Technik) einzusetzen, mit der das Kennfeld (ein sogenanntes Muscheldiagramm) eines Motors verändert werden kann. Durch die Steuereinheit kann die Kraftstoffeinspritzpumpe bzw. das Kraftstoffeinspritzsystem angesteuert und das Kennfeld des Motors derartig verändert werden, dass keine Leistung abgegeben wird, die den Antriebsstrang überlasten und somit dessen Lebensdauer negativ beeinflussen könnte. Auch hier kann es sich um eine einfache Steuerung oder einen geschlossenen Regelkreis handeln.

Die Mittel zur Bestimmung eines kritischen Betriebszustands des Ladegeräts können beispielsweise Dehnungsmessstreifen umfassen, die an einer oder mehreren Achsen des Ladegeräts, vorzugsweise jedoch an einer Hinterachse, angeordnet sind. Durch Einsatz von Dehnungsmessstreifen kann die Durchbiegung einer Achse gemessen und als Maß für die Belastung einer anderen Achse, beispielsweise der Vorderachse, herangezogen werden. Dadurch kann der Beladungszustand des Fahrzeugs sowie indirekt, zumindest näherungsweise, auch die Position des Auslegers mit oder ohne Last erfasst werden. So kann die Durchbiegung der Hinterachse mittels eines Dehnungsmessstreifens ("DMS") gemessen und darauf geschlossen werden, dass, sobald die Hinterachse sich nicht mehr durchbiegt, keinerlei Gewicht mehr auf ihr lastet und das Gewicht des Fahrzeugs und seiner Last vollständig auf der Vorderachse ruht. Dieser Effekt der Entlastung der Hinterachse bei gleichzeitiger Mehrbelastung der Vorderachse kann zur Bestimmung eines kritischen Betriebszustands bzw. zur Bestimmung einer Überlastungsgefahr für die Vorderachse herangezogen werden. Besonders vorteilhaft ist, dass auch die Horizontallage des Ladegeräts und somit Neigungswinkel des Ladegeräts bzw. Neigungswinkel des Ladegeräteuntergrunds mit in die Bewertung eines kritischen Betriebszustands einfließen können, da beispielsweise bei Laderarbeiten an einer Grube oder an einem Hang Neigungswinkel zu einer Verlagerung der auf die Achsen wirkenden Kräfte führen.

Als Mittel zur Bestimmung eines kritischen Betriebszustands des Ladegeräts können auch Dehnungsmessstreifen eingesetzt werden die an einem Ausleger des Ladegeräts angeordnet sind. Dabei wird die Durchbiegung des Auslegers an einer geeigneten Stelle gemessen und als Maß für den Belastungszustand herangezogen. Je stärker sich der Ausleger durchbiegt, desto stärker muss die Belastung aufgrund der geometrischen Verhältnisse auf der Vorderachse sein. Sollte der Ausleger in seiner Länge variabel sein, so kann ein kritischer Betriebszustand ausgehend von seiner minimalen Länge bestimmt werden, da im Normalfall mit zunehmender Auslegerlänge durch die sich ändernden Hebelverhältnisse eine Verlagerung der Belastung von der Hinterachse auf die Vorderachse erfolgt.

In einer weiteren Ausführungsform können die Mittel Drucksensoren umfassen, die an einem Aktuator, insbesondere Hydraulik- oder Pneumatikzylinder, angeordnet sind. Bei dieser Ausführungsform wird beispielsweise der Druck auf der Hubseite eines zum Heben und Senken des Auslegers eingesetzten Hubzylinders gemessen. Dabei kann der in dem Hubzylinder wirkende Druck als ein Maß für die Belastung der Vorderachse und zur Bestimmung eines kritischen Betriebszustands herangezogen werden. Auch hierbei sollte bei einem in seiner Länge variablen Ausleger ein kritischer Betriebszustand ausgehend von seiner minimalen Länge bestimmt werden, da im Normalfall mit zunehmender Auslegerlänge durch die sich ändernden Hebelverhältnisse der Druck auf den Hubzylinder zunimmt.

Um eine genauere Bestimmung eines kritischen Betriebszustands zu erreichen, können des Weiteren Positionssensoren eingesetzt werden, mittels derer die genaue Position bzw. Stellung des Auslegers bezüglich des Anstellwinkels (Schwenkwinkels) und/oder der Ausfahrlänge bestimmbar ist. Durch die Signale der Positionssensoren können die durch Manipulation des Auslegers (Ausfahren/Einfahren, Heben/Senken) variierenden Hebel- und Kräfteverhältnisse am Fahrzeug bei der Bestimmung eines kritischen Betriebszustands mit berücksichtigt werden. Dadurch können kritische Betriebszustände enger eingegrenzt werden, so dass der Leistungsbedarf nicht unnötig frühzeitig begrenzt wird.

Des Weiteren ist es denkbar den Druck auf der Hubseite eines Aktuators, wie z. B. einem Einkippzylinder, zu messen, der zum Kippen eines am Ausleger angeordneten Werkzeugs verwendet wird. Gleichzeitig wird die genaue Position des Auslegers bestimmt. Sind Druck- und Positionswerte erfasst, kann der Beladungszustand ermittelt und ein kritischer Betriebszustand bestimmt werden.

In einer weiteren Ausführungsform können die Mittel zur Erfassung eines kritischen Betriebszustands Sensoren umfassen, mit denen eine Fahrzeuggeschwindigkeit ermittelbar ist. Ein an den Achsen des Fahrzeugs anliegendes maximales Drehmoment nimmt im Normalfall, bei Vorhandensein eines am Antriebsstrang des Fahrzeugs angeordneten Drehmomentwandlers, mit geringerer Fahrgeschwindigkeit bzw. mit geringerer Drehmomentwandlerabtriebsdrehzahl zu. Somit kann die Fahrzeuggeschwindigkeit als Maß für einen kritischen Betriebszustand des Ladegeräts bzw. des Fahrzeugs herangezogen werden, so dass ein Messsignal der Fahrgeschwindigkeit zur präventiven Begrenzung der Motorleistung verwendet werden kann.

Eine weitere Möglichkeit besteht darin, Mittel zur Bestimmung eines kritischen Betriebszustands einzusetzen, die Sensoren umfassen, welche einen für ein Getriebe des Ladegeräts einstellbaren Gang erfassen. Bei höheren Übersetzungen, also kleineren Gängen, nehmen die am Antriebsstrang des Fahrzeugs bzw. Ladegerätes anliegenden maximalen Drehmomente zu, so dass sich kritische Betriebszustände einstellen können. Diese Möglichkeit ist als besonders einfach zu betrachten, da hier festgestellt wird, in welchem Gang sich das Getriebe des Fahrzeugs befindet und in Abhängigkeit dessen ein kritischer Betriebszustand definiert werden kann, um die maximale Motorleistung zu begrenzen.

Ferner ist es möglich ein durch eine Steuereinheit generiertes erstes Steuersignal als maßgebendes Signal zur Erzeugung eines weiteren Steuersignals zur Begrenzung der Antriebsleistung zu nutzen. Dies würde der Fall sein, wenn durch eine Steuereinheit ein Signal ausgesendet wird, beispielsweise ein Schaltsignal für ein Automatikgetriebe, und in Abhängigkeit dessen von derselben Steuereinheit die Generierung des Signals zur Begrenzung der Antriebsleistung eingeleitet wird. Denkbar ist auch, dass eine zweite Steuereinheit vorhanden ist, die ein erstes Signal erzeugt, in Abhängigkeit dessen von der ersten Steuereinheit das Signal zur Begrenzung der Antriebsleistung generiert wird. Die Mittel zur Bestimmung eines Überlastungszustands können somit auch von einer Steuereinheit ausgesendete Signale umfassen.

In einer weiteren Ausführungsform können die Mittel Drucksensoren umfassen, die an einem oder mehreren hydraulischen oder pneumatischen Aktuatoren, vorzugsweise Hydraulikzylinder angeordnet sind. Dabei handelt es sich um Hydraulikzylinder, die vorzugsweise zwischen einem Rahmen und den Achsen des Ladegerätes angeordnet sind, um eine einstellbare Position des Rahmens hinsichtlich Krängung gegenüber dem Ladegeräteuntergrund bzw. gegenüber der Achsen beizubehalten bzw. zu verändern. Zudem können diese Zylinder auch dazu verwendet, um die Achsen des Fahrzeuges zur Erhöhung des Fahrkomforts zu federn. Dabei kann der Druck in den Hydraulikzylindern gemessen werden, mit dem beispielsweise die Vorderachse des Fahrzeugs in ihrer Position gehalten wird. Der Druck, der auf der Hubseite der Zylinder wirkt, kann ebenfalls als Maß für die Bestimmung eines kritischen Betriebszustands herangezogen werden, wobei gegebenenfalls auch der Druck auf der Senkseite der Zylinder gemessen werden kann, um eine Verfälschung des Messergebnisses durch eine mögliche Verspannung des Zylinders zu kompensieren.

Die Vorteile der Erfindung liegen darin, dass durch präventive Leistungsbegrenzung bei Eintreten eines kritischen Betriebszustands für das Ladegerät der Antriebsstrang gegen eine Überlastung abgesichert wird. Das Auftreten von Extrembelastungen für den Antriebstrang kann dadurch vermieden werden, so dass kostengünstigere Achskonstruktionen, die nur für den Normalbetrieb ausgelegt werden müssen, verwendet werden können. Ein weiterer Vorteil besteht darin, dass oftmals bereits vorhandene Komponenten des Fahrzeugs verwendet werden können (wie z. B. eine Kraftstoffeinspritzpumpe, eine elektrische Steuereinheit, Mittel zur Bestimmung der Fahrgeschwindigkeit, Dehnungsmessstreifen), die lediglich miteinander verknüpft werden müssen.

Alternativ ist es auch möglich, an Stelle von Sensoren, beispielsweise an Stelle von Positionssensoren oder Drucksensoren, Schalter einzusetzen, insbesondere Druckschalter und/oder Positionsschalter, die bei Betätigung durch einen sich einstellenden Grenzdruck bzw. durch mechanisches Auslösen durch ein sich bewegendes Teil ein entsprechendes Signal zur Bestimmung eines Überlastungszustands auslösen.

Anhand der Zeichnung, die mehrere Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Seitenansicht eines erfindungsgemäßen Ladegeräts mit Mitteln zur Bestimmung kritischer Betriebszustände,
- Fig. 2: eine schematische Querschnittsansicht einer Hinterachse des Ladegeräts aus Figur 1 mit weiteren Mitteln zur Bestimmung kritischer Betriebszustände und
- Fig. 3: eine schematische Darstellung des Allradantriebsstrangs des Laderfahrzeugs aus Figur 1.

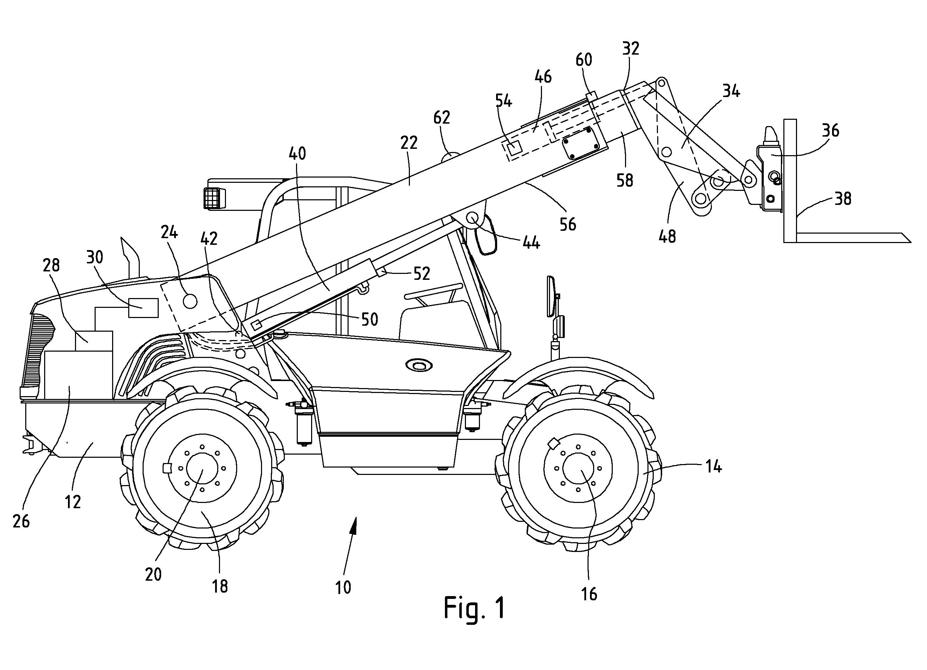

Figur 1 zeigt ein allradbetriebenes Ladegerät 10 in Form eines Teleskopladers. Das Ladegerät 10 weist einen Rahmen 12 auf, welcher von einer mit vorderen Antriebsrädern 14 versehenen Vorderachse 16 und von einer mit hinteren Antriebsrädern 18 versehenen Hintersachse 20 getragen wird.

Das Ladegerät 10 weist einen Ausleger 22 auf, der schwenkbar um eine parallel zu den Antriebsachsen 16, 20 angeordnete Schwenkachse 24 am Rahmen 12 angelenkt ist.

Das Ladegerät weist des Weiteren einen Antriebsmotor 26 auf, welcher von einer elektronisch gesteuerten Kraftstoffeinspritzpumpe 28 mit Kraftstoff versorgt wird. Des Weiteren ist eine mit der Kraftstoffeinspritzpumpe 28 verbundene elektronische Steuereinheit 30 vorgesehen.

Der Ausleger 22 ist als Teleskopausleger ausgebildet und weist an seinem freien Ende 32 einen Arbeitskopf 34 auf, mit dem mittels einer schwenkbar am Arbeitskopf 34 angelenkten Werkzeugaufnahme 36 ein Laderwerkzeug 38 aufnehmbar ist. Der Ausleger 22 kann über im Inneren des Auslegers 22 angeordnete Verstellzylinder (nicht dargestellt) teleskopisch ein- bzw. ausgefahren werden. Über einen als Hydraulikzylinder ausgebildeten Aktuator 40 kann der Ausleger 22 verschwenkt werden. Der Aktuator 40 ist an einem ersten Ende, vorzugsweise kolbenbodenseitig, schwenkbar um eine Schwenkachse 42 mit dem Rahmen 12 und an einem zweiten Ende, vorzugsweise stangenseitig, schwenkbar um eine Schwenkachse 44 mit dem Ausleger 22 verbunden. Des Weiteren ist im Bereich des freien Endes 32 ein im Inneren des Auslegers 22 angeordneter und als Hydraulikzylinder ausgebildeter Aktuator 46 vorgesehen. Der Aktuator 46 dient als Einkippzylinder der schwenkbar am Arbeitskopf 34 angelenkten Werkzeugaufnahme 36, wobei die Werkzeugaufnahme 36 mittels eines am Arbeitskopf 34 angeordneten und mit dem Aktuator 46 verbundenen Kippgestänges 48 verschenkbar ist.

Der zum Verschwenken des Auslegers 22 angeordnete Aktuator 40 ist auf seiner Hubseite mit einem Drucksensor 50 versehen, mittels dem ein in der hubseitigen Kammer des Aktuators 40 vorherrschender Druck erfasst werden kann. Des Weiteren ist der Aktuator 40 stangenseitig mit einem Positionssensor 52 versehen, mittels dem eine Ausfahrstellung des Aktuators 40 erfasst werden kann. Über die von dem Positionssensor 52 erfasste Ausfahrstellung kann die Schwenkposition (Schwenkwinkel) des Auslegers 22 ermittelt werden. Alternativ kann auch ein als Drehwinkelgeber ausgebildeter Positionssensor (nicht gezeigt) an der Schwenkachse 24 des Auslegers 22 angeordnet sein, um die Schwenkposition des Auslegers 22 zu erfassen.

Der zum Verschwenken der Werkzeugaufnahme 36 angeordnete Aktuator 46 ist auf seiner Hubseite mit einem Drucksensor 54 versehen, mittels dem ein in der hubseitigen Kammer des Aktuators 46 vorherrschender Druck erfasst werden kann. Je nach Ausgestaltung und Anordnung des Kippgestänges 48, kann der Aktuator 46 auch auf seiner Stangenseite mit einem Drucksensor versehen sein, mittels dem ein in der stangenseitigen Kammer vorherrschender Druck erfasst werden kann. Entscheidend ist, dass der Druck erfasst wird, der im Aktuator 46 aufgebracht werden muss, um eine auf dem Laderwerkzeug 38 wirkende Last zu halten.

Der Ausleger 22 verfügt über einen ersten und einen zweiten Auslegerabschnitt 56, 58, wobei der zweite Auslegerabschnitt 58 im Inneren des ersten Auslegerabschnitts 56 ein- bzw. ausfahrbar gelagert ist. Am freien Ende des ersten Auslegerabschnitts 56 ist ein weiterer Positionssensor 60 angeordnet, mittels dem eine Ausfahrposition des zweiten Auslegerabschnitts 58 erfasst werden kann.

Des Weiteren ist der Ausleger 22 mit einem Dehnungsmessstreifen 62 versehen, mittels dem die Durchbiegung des Auslegers 22 erfasst werden kann. Der Dehnungsmessstreifen 62 ist vorzugsweise an der Oberseite des ersten Auslegerabschnitts 56 in Höhe der Schwenkachse 44 angeordnet, da dort die höchste Durchbiegung unter Last zu erwarten ist.

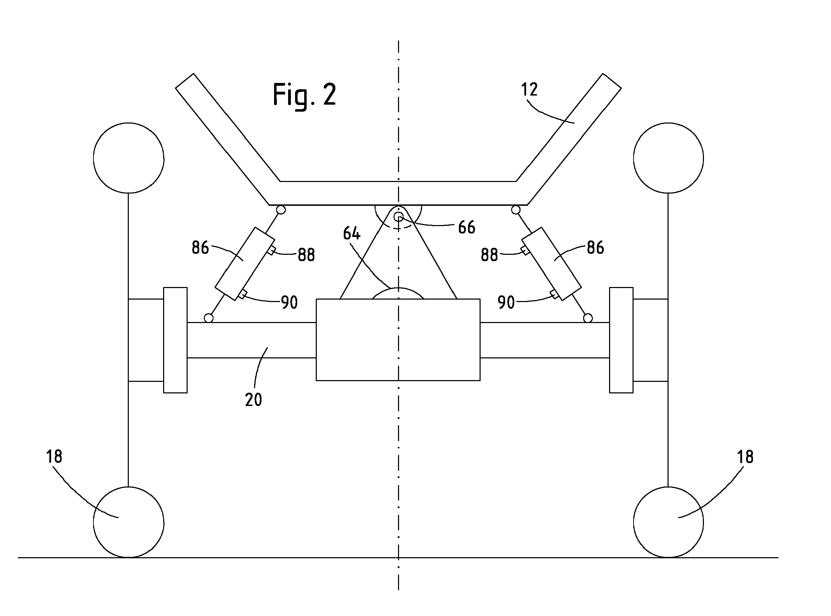

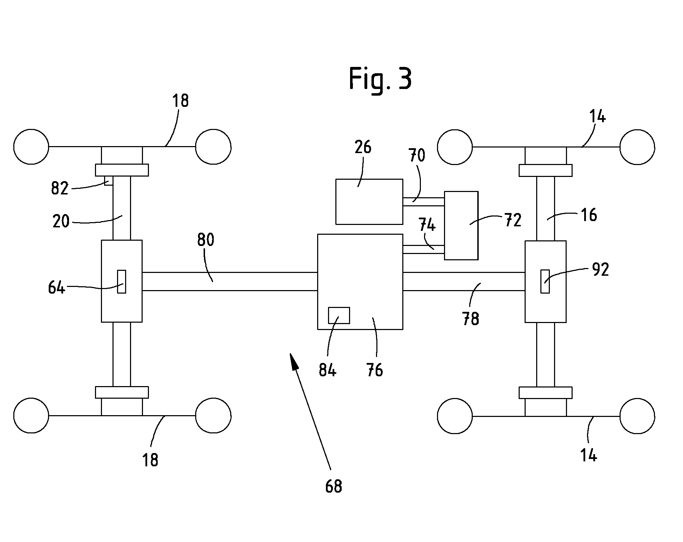

Auf der Hinterachse 20 des Ladegeräts 10 ist ein weiterer Dehnungsmessstreifen 64 vorgesehen, wie in den Figuren 2 und 3 dargestellt ist. Die Hinterachse 20 ist vorzugsweise mittels eines Pendellagers 66 (Figur 2) mit dem Rahmen 12 verbunden. Der Dehnungsmessstreifen 64 ist vorzugsweise mittig zur Hinterachse 20 angeordnet, da dort bei einer pendelnd gelagerten Hinterachse 20 die höchste Durchbiegung unter Last zu erwarten ist.

Der Antriebsstrang 68 des Ladegerätes 10 ist in Figur 3 dargestellt. Ausgehend vom Antriebsmotor 26 wird eine Antriebsleistung über eine Drehmomentwandlerantriebswelle 70 einem Drehmomentwandler 72 zugeführt. Der Drehmomentwandler überträgt diese mittels einer Getriebeantriebswelle 74 an ein Schaltgetriebe 76. Von dort aus wir die Antriebsleistung über eine Vorderachsantriebswelle 78 an die Vorderachse 16 und über eine Hinterachsantriebswelle 80 an die Hinterachse 20 übertragen.

An der Hinterachse 20 ist ein Drehzahlsensor 82 angeordnet, mittels dem die Geschwindigkeit in Abhängigkeit der Drehzahl des Hinterrades 18 erfasst werden kann.

Des Weiteren ist am Getriebe 76 ein Stellsensor 84 angeordnet, mittels dem eine Gangstellung des Getriebes 76 erfasst werden kann.

In einem weiteren Ausführungsbeispiel ist der Rahmen 12 über hydraulisch betriebene Aktuatoren 86 mit der Vorder- und Hinterachse 20 verbunden. Zur Verdeutlichung ist dies für die Hinterachse 20 in Figur 2 dargestellt. Die hydraulischen Aktuatoren 86 sind als doppelt wirkende Hydraulikzylinder ausgebildet und sowohl senkseitig als auch hubseitig mit Drucksensoren 88, 90 versehen, mittels denen der Druck auf der Senk- bzw. Hubseite der Aktuatoren 86 ermittelt werden kann.

Die bisher beschriebenen Mittel zur Erfassung kritischer Betriebszustände des Fahrzeugs, wie Drucksensoren 50, 54, 88, 90, Positionssensoren 52, 60, Dehnungsmessstreifen, 62, 64, Drehzahlsensor 82 und Stellsensor 84 sollen eine Auswahl verschiedener Möglichkeiten darstellen. Alle dargestellten Mittel 50, 52, 54, 60, 62, 64, 82, 84, 88, 90 sind elektronisch mit der Steuereinheit 30 verbunden, die in Abhängigkeit der von den Mitteln 50, 52, 54, 60, 62, 64, 82, 84, 88, 90 gesendeten Signale ein Steuersignal zur Begrenzung der Antriebsleistung für die Kraftstoffeinspritzpumpe 28 generiert. Dabei ist es selbstverständlich nicht erforderlich die gesamten dargestellten Mittel 50, 52, 54, 60, 62, 64, 82, 84, 88, 90 gemeinsam anzuordnen um einen kritischen Betriebszustand des Ladegeräts 10 zu bestimmen. Aus Darstellungsgründen wurden jedoch die gesamten beschriebenen Mittel 50, 52, 54, 60, 62, 64, 82, 84, 88, 90 an demselben Ladegerät 10 in den Figuren 1 bis 3 angeordnet.

Im Folgenden sollen einige Vorgehensweisen zur Bestimmung von kritischen Betriebszuständen des Ladegeräts 10, die in Zusammenhang mit einer präventiven Leistungsbegrenzung eine Überlastsicherung für den Antriebsstrang 68 darstellen, näher erläutert werden.

Ein besonders bevorzugtes Ausführungsbeispiel berücksichtigt die Durchbiegung der Hinterachse 20 als Maß für die Belastung der Vorderachse 16. Diese Durchbiegung der pendelnd gelagerten Hinterachse 20 wird mittels des Dehnungsmessstreifens 64 gemessen. Sobald die Hinterachse 20 sich nicht mehr durchbiegt, kann davon ausgegangen werden, dass nahezu kein Gewicht auf ihr lastet und das Gewicht des Ladegeräts 10 und gegebenenfalls das der auf dem Laderwerkzeug 38 lastenden Last vollständig auf der Vorderachse 16 ruht. Dieser Effekt der Entlastung der Hinterachse 20 bei gleichzeitiger Mehrbelastung der Vorderachse 16 kann zur Bestimmung eines kritischen Betriebszustand für das Ladegerät 10 und damit zur Bestimmung einer Überlastungsgefahr des Antriebsstrangs 68, insbesondere der Vorderachsantriebswelle 78, herangezogen werden. Durch eine in der Steuereinheit 30 implementierte vorgebbare Schwellwertsetzung kann somit in Abhängigkeit von dem vom Dehnungsmessstreifen 64 an die Steuereinheit 30 gesendeten Signal ein Steuersignal generiert werden. Das Steuersignal wird von der Steuereinheit 30 durch geeignete Soft- und Hardware, wie sie von einem Fachmann in einfacher Weise installiert werden kann, von der Steuereinheit 30 generiert und der Kraftstoffeinspritzpumpe 28 zugeführt, um die maximal zulässige Antriebs- bzw. Beschleunigungsleistung, die der Motor zur Verfügung stellen kann, zu begrenzen. Damit wird eine Überlastsicherung für den Antriebsstrang 68 des Ladegeräts 10 realisiert. Diese Vorgehensweise der Schwellwertsetzung wird in analoger Weise auch in den folgenden Ausführungsbeispielen verfolgt.

Eine weitere Möglichkeit besteht darin, das die Durchbiegung des Auslegers 22 an einer geeigneten Stelle, vorzugsweise in Höhe der Schwenkachse 44, durch den Dehnungsmessstreifen 62 erfasst wird. Je stärker sich der Ausleger 22 durchbiegt, desto stärker muss die Belastung aufgrund der am Ladegerät 10 vorliegenden geometrischen Verhältnisse auf der Vorderachse 16 sein. Sollte der Ausleger 22 ausgefahren sein, so wirkt sich das belastend auf die Vorderachse aus, da die durch Ausfahren des Auslegers 22 sich ändernden Hebelverhältnisse eine Verlagerung der Belastung von der Hinterachse 20 auf die Vorderachse 16 hervorrufen. Gegensätzlich verhält es sich beim Ausfahren des Aktuators 40 zum Verschwenken des Auslegers 22. Beim Ausfahren des Aktuators 40 nimmt der Schwenkwinkel des Auslegers 22 zu. Je größer der Schwenkwinkel des Auslegers 22 ist, umso geringer ist die Belastung der Vorderachse. Bei der Bestimmung eines kritischen Betriebszustands des Ladegeräts 10 wird somit, unter Zugrundelegung einer maximalen Länge des Auslegers 22 und eines kleinen Schwenkwinkels (bzw. eines Schwenkwinkels gleich Null), ein zusätzlicher Sicherheitsfaktor einbezogen. Allein in Abhängigkeit des von Dehnungsmessstreifen 62 gelieferten Signals kann also die Bestimmung eines kritischen Betriebszustands des Ladegeräts bestimmt werden, bei dem eine Überlastung des Antriebsstrangs 68 eintreten könnte. Im Wesentlichen beschränkt sich eine derartige Bestimmung auf eine Überlastsicherung für den mit der Vorderachse 16 verbundenen Antriebsstrang 68, insbesondere der Vorderachsantriebswelle 78. Unter zusätzlicher Berücksichtigung der von den Positionssensoren 52, 60 gelieferten Signale kann neben der Belastung der Vorderachse 16 auch die Belastung der Hinterachse 20 weitestgehend genau ermittelt werden, da durch die Positionssensoren 52, 60 die genaue Stellung des zweiten Auslegerabschnitts 58 und die Schwenkstellung des Auslegers 22 und damit die Hebelverhältnisse am Ladegerät 10 berücksichtigt werden. Durch eine weitere in der Steuereinheit 30 implementierte vorgebbare Schwellwertsetzung kann somit in Abhängigkeit des vom Dehnungsmessstreifen 62 an die Steuereinheit 30 gesendeten Signals und gegebenenfalls auch in Abhängigkeit der von den Positionssensoren 52, 60 an die Steuereinheit 30 gesendeten Signale ein kritischer Betriebszustand des Ladegeräts bestimmt und ein entsprechendes Steuersignal, zur präventiven Leistungsbegrenzung generiert werden, wobei die Leistungsbegrenzung auch hier durch elektronische Ansteuerung der Kraftstoffeinspritzpumpe 28 erfolgen kann.

Eine weitere Möglichkeit ergibt sich durch Erfassung des Drucks auf der Hubseite des Aktuators 40 mittels des Drucksensors 50. Der gemessene Druck, der zum Heben einer auf dem Ladewerkzeug 38 lastenden Last aufzubringen ist, kann als Maß für die Belastung der Vorderachse 16 herangezogen werden. Hierbei gilt, wie oben beschrieben, dass bei ausgefahrenem Ausleger 22 bzw. bei kleinem Schwenkwinkel des Auslegers 22 die Belastung der Vorderachse 16 höher ist, als bei eingefahrenem Ausleger 22 bzw. bei großem Schwenkwinkel des Auslegers 22. Dies bedeutet, das auch hier bei Nichtberücksichtigung der von den Positionssensoren 52, 60 gelieferten Signale und unter Annahme einer maximalen Länge des Auslegers 22 und eines kleinen Schwenkwinkels (bzw. eines Schwenkwinkels gleich Null) eine zuverlässige Bestimmung eines kritischen Betriebszustands für das Ladegerät 10 erfolgen kann. Unter Einbezugnahme der von den Positionssensoren 52, 60 gelieferten Signale kann jedoch eine Präzisierung kritischer Betriebszustände für das Ladegerät 10 erzielt werden, um nicht unnötig frühzeitig eine präventive Leistungsbegrenzung einzuleiten. Die Generierung eines Steuersignals für die Kraftstoffeinspritzpumpe 28 kann somit in analoger Weise zu den vorherigen Ausführungsbeispielen durch eine weitere in der Steuereinheit 30 implementierte vorgebbare Schwellwertsetzung und, wie bereits erwähnt, in Abhängigkeit des vom Drucksensor 50 an die Steuereinheit 30 gesendeten Signals und gegebenenfalls auch in Abhängigkeit der von den Positionssensoren 52, 60 an die Steuereinheit 30 gesendeten Signale erfolgen.

Eine weitere Möglichkeit ergibt sich durch Erfassung des Drucks auf der Hubseite des Aktuators 46 mittels des Drucksensors 54 in Kombination mit einer Bestimmung der Auslegerposition bzw. -Stellung mittels der Positionssensoren 52, 60. Der gemessene Druck, der zum Heben bzw. Halten oder Kippen einer auf dem Ladewerkzeug 38 lastenden Last aufzubringen ist, kann in Verbindung mit vorherrschenden Hebelverhältnissen am Ladegerät 10 als Maß für den Beladungszustand des Ladegeräts 10 herangezogen werden. Sind diese Werte erfasst, kann der Beladungszustand errechnet werden und die Belastung der Antriebsachsen 16, 20 bestimmt werden. Die Generierung eines Steuersignals für die Kraftstoffeinspritzpumpe 28 kann somit in analoger Weise zu den vorherigen Ausführungsbeispielen durch eine weitere in der Steuereinheit 30 implementierte vorgebbare Schwellwertsetzung und, wie bereits erwähnt, in Abhängigkeit der vom Drucksensor 54 und den Positionssensoren 52, 60 an die Steuereinheit 30 gesendeten Signale erfolgen.

Eine weitere Möglichkeit zur Bestimmung eines kritischen Betriebszustands für das Ladegerät 10 besteht darin, die Fahrgeschwindigkeit des Ladegeräts 10 zu überwachen. Das an den Antriebsachsen 16, 20 anliegende maximale Drehmoment nimmt aufgrund des Drehmomentwandlers 72 mit geringerer Fahrgeschwindigkeit und einer damit verbundenen geringeren Drehmomentwandlerabtriebsdrehzahl zu. Mit geringen Fahrgeschwindigkeiten treten somit kritische Betriebszustände für das Ladegerät 10, woraufhin präventiv eine Leistungsbegrenzung des Antriebsmotors 26 eingeleitet werden kann. Durch Erfassen der Raddrehzahl an der Hinterachse 20 mittels des Drehzahlsensors 82 kann die Fahrgeschwindigkeit ermittelt und überwacht werden und zur Generierung eines Steuersignals durch die Steuereinheit 30 herangezogen werden. Die Generierung eines Steuersignals für die Kraftstoffeinspritzpumpe 28 kann somit in analoger Weise zu den vorherigen Ausführungsbeispielen durch eine weitere in der Steuereinheit 30 implementierte vorgebbare Schwellwertsetzung in Abhängigkeit des vom Drehzahlsensor 82 an die Steuereinheit 30 gesendeten Signals erfolgen.

Eine weitere Möglichkeit besteht darin, einen kritischen Betriebszustand für das Ladegerät 10 allein durch Ermittlung des Gangs, in dem sich das Getriebe 76 befindet, zu bestimmen. Die Generierung eines Steuersignals für die Kraftstoffeinspritzpumpe 28 kann somit in analoger Weise zu den vorherigen Ausführungsbeispielen durch eine weitere in der Steuereinheit 30 implementierte vorgebbare Schwellwertsetzung und in Abhängigkeit des vom Stellsensor 84 an die Steuereinheit 30 gesendeten Signals erfolgen.

Eine weitere Möglichkeit besteht darin, den Druck in den Aktuatoren 86 mittels der Drucksensoren 88, 90 zu erfassen. Eine derartige Anordnung von Aktuatoren 86 kann unter anderem eingesetzt werden, um eine Kippbarkeit des Rahmens 12 seitlich zur Ladegerätlängsrichtung (Krängung) zu ermöglichen. Des Weiteren können diese Aktuatoren 86 auch dazu verwendet werden, um eine oder mehrere Antriebsachsen 16, 20 des Ladegeräts 10 zur Erhöhung des Fahrkomforts zu federn. Der durch die Drucksensoren 90 auf der Hubseite der Aktuatoren 86 ermittelte Druck, kann ebenfalls als Maß für die Belastung der Antriebsachsen 16, 20 herangezogen werden, wobei gegebenenfalls gleichzeitig der durch die Drucksensoren 88 auf der Senkseite der Aktuatoren 86 ermittelte Druck berücksichtigt werden kann, um eine Verfälschung des Messergebnisses durch eine mögliche Verspannung der Aktuatoren 86 zu kompensieren. Die Generierung eines Steuersignals für die Kraftstoffeinspritzpumpe 28 kann somit in analoger Weise zu den vorherigen Ausführungsbeispielen durch eine weitere in der Steuereinheit 30 implementierte vorgebbare Schwellwertsetzung und in Abhängigkeit der von den Drucksensoren 90 an die Steuereinheit 30 gesendeten Signale und gegebenenfalls auch in Abhängigkeit der von den Drucksensoren 88 an die Steuereinheit 30 gesendeten Signale erfolgen.

Die Leistungsbegrenzung erfolgt vorzugsweise dadurch, dass die Kraftstoffeinspritzpumpe 28 durch das von der Steuereinheit 30 generierte Steuersignal angesteuert wird, und infolgedessen das Kennfeld (ein sogenanntes Muscheldiagramm) des Antriebsmotors 26 verändert wird. Hierbei wird das Kennfeld derart verändert, dass der Antriebsmotor 26 keine höhere Antriebsleistung mehr abgeben kann. Hierbei kann es sich um eine einfache Steuerung oder einen geschlossenen Regelkreis handeln. Es ist jedoch auch denkbar, dass die Leistungsbegrenzung auf andere Weise erfolgt, so dass beispielsweise von der Steuereinheit 30 bzw. durch das generierte Steuersignal geeignete Stellmittel (nicht gezeigt) angesteuert werden, die eine direkte Begrenzung der dem Antriebsmotor 26 zur Verbrennung zugeführten Kraftstoffmenge bewirken.

Auch wenn die Erfindung lediglich anhand der oben beschriebenen Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise das Ladefahrzeug 10 mit weiteren Mitteln ausgerüstet werden, beispielsweise mit einem weiteren Dehnungsmessstreifen 92, der auf der Vorderachse 16 angeordnet wird (siehe Figur 3), um einen kritischen Betriebszustand des Ladegeräts 10 bezüglich eines Überlastungszustands des Antriebsstrangs 68 zu bestimmen.

## Patentansprüche

1. Ladegerät mit wenigstens einem Antriebsstrang (68), wenigstens einer Überlastsicherungseinrichtung für den Antriebsstrang (68) und Mittel (50, 52, 54, 60, 62, 64, 82, 84, 88, 90, 92) zur Bestimmung eines Überlastungszustands für den Antriebsstrang (68), **dadurch gekennzeichnet, dass** anhand der Mittel (50, 52, 54, 60, 62, 64, 82, 84, 88, 90, 92) Betriebszustände des Ladegeräts (10) bestimmbar sind, durch welche die Belastung des Antriebsstrangs (68) potentiell beeinflussbar ist.

2. Ladegerät nach Anspruch 1, **dadurch gekennzeichnet, dass** die Überlastsicherungseinrichtung eine Steuereinheit (30) umfasst, mit welcher von den Mitteln (50, 52, 54, 60, 62, 64, 82, 84, 88, 90, 92) gelieferte Signale erfassbar sind und eine an den Antriebsstrang (68) abgegebene Antriebsleistung begrenzbar ist.

3. Ladegerät nach einem oder mehreren der vorhergehenden Ansprüche, **dadurch gekennzeichnet, dass** die Mittel (64, 92) Dehnungsmessstreifen umfassen, die an einer oder mehreren Achsen (16, 20) des Ladegeräts (10) angeordnet sind.

4. Ladegerät nach einem oder mehreren der vorhergehenden Ansprüche, **dadurch gekennzeichnet, dass** die Mittel (62) Dehnungsmessstreifen umfassen, die an einem Ausleger (22) des Ladegeräts (10) angeordnet sind.

5. Ladegerät nach einem oder mehreren der vorhergehenden Ansprüche, **dadurch gekennzeichnet, dass** die Mittel (50, 54, 88, 90) Drucksensoren umfassen, die an einem Aktuator (40, 46, 86), insbesondere Hydraulikzylinder, angeordnet sind.

6. Ladegerät nach einem oder mehreren der vorhergehenden Ansprüche, **dadurch gekennzeichnet, dass** die Mittel (52, 60) Positionssensoren umfassen, die an dem Ausleger (22) und/oder an einem Aktuator (40) des Ladegeräts (10) zur Bestimmung der Position bzw. Stellung des Auslegers (22) angeordnet sind.

7. Ladegerät nach einem oder mehreren der vorhergehenden Ansprüche, **dadurch gekennzeichnet, dass** die Mittel (82) Sensoren umfassen, mit welchen eine Fahrzeuggeschwindigkeit ermittelbar ist.

8. Ladegerät nach einem oder mehreren der vorhergehenden Ansprüche, **dadurch gekennzeichnet, dass** die Mittel (84) Sensoren umfassen, mit welchen ein für ein Getriebe des Ladegeräts (10) einstellbarer Gang erfassbar ist.

9. Ladegerät nach einem oder mehreren der vorhergehenden Ansprüche, **dadurch gekennzeichnet, dass** die Mittel eine Steuereinheit (30) umfassen, welche in Abhängigkeit von einem ersten Steuersignal, insbesondere einem Getriebeschaltsignal, ein zweites Steuersignal generiert, mit welchem eine an den Antriebsstrang (68) abgegebene Antriebsleistung begrenzbar ist.

10. Ladegerät nach einem oder mehreren der vorhergehenden Ansprüche, **dadurch gekennzeichnet, dass** die Mittel (88, 90) Drucksensoren umfassen, die an einem oder mehreren hydraulischen oder pneumatischen, zwischen einem Rahmen (12) und den Achsen (16, 20) des Ladegeräts (10) angeordneten Aktuatoren (90), vorzugsweise Hydraulikzylinder, angeordnet sind.

11. Ladegerät nach einem oder mehreren der vorhergehenden Ansprüche, **dadurch gekennzeichnet dass** die Mittel (50, 52, 54, 60, 82, 84, 88, 90) Schalter, insbesondere Druckschalter und/oder Positionsschalter, umfassen, die bei Betätigung ein entsprechendes Signal auslösen.
